# FASCICULE DE BREVET EUROPEEN

(11) **EP 2 121 298 B1**
(45) Date de publication et mention de la délivrance du brevet: **22.04.2015**
(21) Numéro de dépôt: 08761763.5
(22) Date de dépôt: 15.01.2008
(51) Int. Cl.: B32B 1/08, F16L 11/04

(54) **CANALISATION POUR LE TRANSPORT DE FLUIDE**
LEITUNG ZUR FÖRDERUNG VON FLÜSSIGKEITEN
DUCT FOR FLUID TRANSPORT

(30) Priorité: 17.01.2007 FR 0700310
(43) Date de publication de la demande: 25.11.2009
(73) Titulaire: MGI COUTIER, 01410 Champfromier (FR)
(72) Inventeur: POSSAMAÏ, Joël, F-83120 Sainte Maxime (FR)
(74) Mandataire: Verriest, Philippe
(86) Numéro de dépôt international: PCT/FR2008/000043
(87) Numéro de publication internationale: WO 2008/107535

(56) Documents cités:
- EP-A2- 0 294 181
- WO-A-95/13494
- US-A- 4 007 070
- US-A- 5 488 974

## Description

La présente invention concerne une canalisation pour le transport de fluide, par exemple une canalisation utilisable pour transporter du carburant pour moteur de véhicule automobile.

La fabrication d'une telle canalisation doit tenir compte de contraintes variées. Il importe notamment que la canalisation soit compatible, d'un point de vue physico-chimique, avec le fluide à transporter.

Dans le cas d'une canalisation de transport de carburant pour moteur de véhicule automobile, la canalisation est en outre exposée, lors du fonctionnement du véhicule, à des températures d'au moins 100 °C et pouvant atteindre près de 175 °C. Une telle canalisation peut aussi entrer en contact avec des organes ou accessoires du moteur, tels qu'un couvre-culasse ou un radiateur, par l'intermédiaire desquels des vibrations du moteur sont transmises et risquent d'éroder la canalisation. Une telle canalisation peut enfin subir également des chocs lors d'un accident ou d'une projection de gravillons par exemple.

Il est connu de protéger la canalisation de ces risques au moyen de gaines de protection que l'on "enfile" sur la canalisation.

Ainsi, pour la protection contre l'abrasion, on utilise souvent des gaines (connues sous la dénomination commerciale Gremflex chez Gremco) tressées à partir de fibres de polyestertéréphtalate (PET) ou de polyamide 6.6.

Pour la protection thermique, on utilise le plus souvent :
- des gaines rayonnantes métalliques (connues sous la dénomination commerciale Gremshield chez Gremco ou sous la dénomination commerciale Textalu chez Federal Mogul), composées d'aluminium industriel collé sur une gaine extensible en fibre de verre tressée,
- des gaines rayonnantes textiles (connues sous la dénomination commerciale GFVA chez Gremco), composées de fibre de verre imprégnée d'une résine de silicone additivée de particules métalliques,
- des gaines absorbantes (connues sous la dénomination commerciale Gesa chez Gremco) composées d'une enduction de silicone sur une gaine extensible en fibre de verre tressée.

La protection vis-à-vis des chocs est généralement assurée au moyen d'un recouvrement thermoplastique en polychlorure de vinyle (PVC connu sous la dénomination commerciale Sunprene chez Resinoplast) ou en élastomère (connu sous la dénomination commerciale Santoprene chez Exxon Mobil) ou d'une gaine de polyamide tressée rembourrée (connue sous la dénomination commerciale Quietguard 3600 chez Federal Mogul).

Ainsi, il n'existe pas, à la connaissance des Demandeurs, de moyens de protection pour canalisation de transport de fluide qui soient suffisamment polyvalents pour protéger à la fois de l'abrasion, des chocs et de la chaleur.

La présente invention vise à fournir une canalisation de transport de fluide incorporant de tels moyens de protection polyvalents.

A cet effet, l'invention a pour objet une canalisation pour le transport de fluide, par exemple du carburant pour moteur de véhicule automobile, du type comprenant au moins une première couche interne revêtue d'une deuxième couche, dans laquelle la deuxième couche est réalisée essentiellement en polyuréthane thermoplastique, et la première couche est réalisée en au moins un polymère compatible avec le transport de fluide chaud, choisi notamment parmi
- le polyamide 12, 11, 6 ou aromatique,
- le polysulfure de phénylène, ou
- un caoutchouc partiellement ou entièrement réticulé ou un complexe multicouche de caoutchouc partiellement ou entièrement réticulé,
la deuxième couche en polyuréthane thermoplastique adhérant à la première couche interne sans couche de liaison intermédiaire.

La première couche interne, par exemple réalisée en un complexe contenant, de l'intérieur vers l'extérieur de la canalisation,
- un polyamide 6, un liant copolyamide, un polyamide 12 (en particulier le complexe connu sous la dénomination commerciale Emseco chez EMS), ou
- un alliage polyamide 6 - polyéthylène, un liant copolyamide, un polyamide 12 (en particulier- le complexe connu sous la dénomination commerciale Rilperm 3020 chez Arkema), ou
- un polyester ou copolyester de type PBT, un liant, un polyamide 12 (en particulier le complexe connu sous la dénomination commerciale Polymer X chez EMS), ou
- un polyamide 6, un alcool vinylique de type EVOH, un liant, un polyamide 12 (en particulier le complexe connu sous la dénomination commerciale MLT 43000 chez Degussa), ou
- un alliage polyamide 6 - polyéthylène, un alcool vinylique de type EVOH, un liant, un polyamide 12 (en particulier le complexe connu sous la dénomination commerciale Rilperm 4020 ou 4030 chez Arkema), ou
- un polyamide 12, un polymère fluoré de type PVDF, un polyamide 12 (en particulier le complexe connu sous la dénomination commerciale MLT 2030 chez Degussa).

Le polyuréthane thermoplastique de la deuxième couche est par exemple de type
- copolyester - polycaprolactone (connu par exemple sous la dénomination commerciale Peralthane D11 H98 chez Merquinsa), de dureté comprise entre 50 et 54 shore D (selon la norme DIN 53.505), de densité comprise entre 1,15 et 1,21 (selon la norme DIN 53.479), avec une température de transition vitreuse (selon la norme DIN 51.007) comprise entre -35 et -39 °C et une température de fusion comprise entre 195 et 220 °C; ou
- de type ester (connu en particulier sous la dénomination commerciale Demospan 1350D chez Bayer), de dureté comprise entre 50 et 54 shore D (selon la norme DIN 53.505) et de densité comprise entre 1,22 et 1,26 (selon la norme DIN 53.479); ou
- de type de copolymère ester-ether ou ether.

Dans une forme de réalisation, la canalisation possède une troisième couche électriquement conductrice située à l'intérieur de la première couche.

La troisième couche est par exemple réalisée en polyamide 12 rendu électriquement conducteur par l'ajout de charges de type noir de carbone ou nanotubes de carbone.

Selon une possibilité, la canalisation possède un treillis de renfort et une couche de recouvrement finale prévus sur la deuxième couche.

Cette couche de recouvrement est par exemple réalisée dans un polyuréthane thermoplastique de même nature chimique que celui de la deuxième couche.

La couche de recouvrement est par exemple réalisée dans un polymère, de type polyamide ou polychlorure de vinyle, compatible chimiquement avec celui employé pour réaliser la deuxième couche.

La première couche peut avoir une épaisseur comprise entre 0,9 et 2 mm. La deuxième couche peut avoir une épaisseur comprise entre 0,2 et 4 mm.

L'invention sera bien comprise à la lecture de la description qui suit, en référence au dessin schématique annexé représentant, à titre d'exemples, quelques formes de réalisation de cette canalisation.
La figure 1 est une vue en perspective et en écorché partiel d'un exemple de réalisation d'une canalisation selon l'invention.
La figure 2 est une vue en perspective et écorché partiel d'un second exemple de réalisation d'une canalisation selon l'invention.

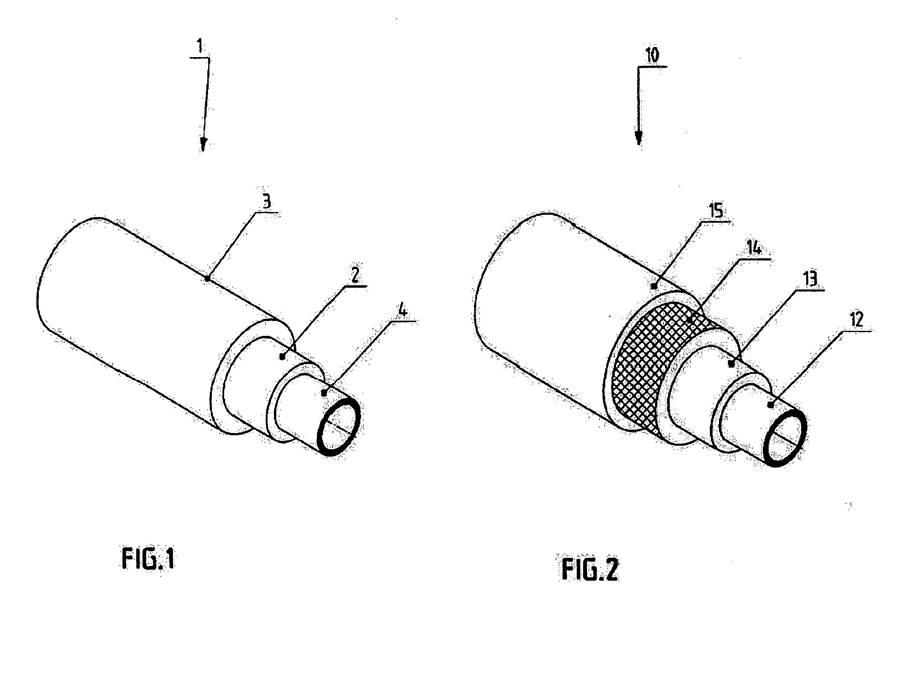

La canalisation tubulaire 1 représentée sur la figure 1, pour le transport de carburant, comprend une première couche interne 2 d'épaisseur comprise entre 0,9 et 2 mm qui est revêtue d'une deuxième couche 3 d'épaisseur comprise entre 0,2 et 4 mm.

La première couche 2 est réalisée en polyamide 12, compatible avec le transport de carburant chaud. La deuxième couche 3 est réalisée en polyuréthane thermoplastique.

La canalisation 1 possède encore ici une troisième couche 4 électriquement conductrice située à l'intérieur de la première couche 2. Cette troisième couche 4 est réalisée en polyamide 12 rendu électriquement conducteur par l'ajout de charges de type noir de carbone ou nanotubes de carbone. La couche 4 électriquement conductrice permet d'éviter tout problème d'accumulation de charges électrostatiques.

La canalisation 10 illustrée sur la figure 2 se distingue de celle de la figure 1 en ce qu'elle ne comporte pas de troisième couche conductrice à l'intérieur de la première couche 12.

En revanche, la deuxième couche 13 de la canalisation 10 est revêtue d'un treillis de renfort 14 et d'une couche de recouvrement 15 finale.

Le treillis de renfort 14 est composé de fils de polyester tressés, de fibre de verre ou d'aramide. Le treillis 14 augmente la résistance à la pression, donc la valeur d'éclatement de la canalisation 10, notamment en cas de température élevée. La maille ou l'écartement des fils doit être réduit pour résister à la pression mais suffisant pour laisser passer la couche de recouvrement 15 vers la deuxième couche 13.

La couche de recouvrement 15 est réalisée dans un polyuréthane thermoplastique de même nature chimique que celui de la deuxième couche 13, ou dans un polymère, de préférence en polychlorure de vinyle, compatible chimiquement avec celui employé pour réaliser la deuxième couche 13, afin de se lier à cette dernière par simple adhésion chimique. La couche de recouvrement 15 peut aussi renfermer des charges pour améliorer par exemple sa tenue au feu ou à l'abrasion.

Les couches 2 ou 12, 3 ou 13 et 15 adhèrent directement l'une à l'autre sans couche de liaison intermédiaire. En particulier, aucun adhésif ou liant ne relie la première couche 2 ou 12 à la deuxième couche 3 ou 13.

Les canalisations 1 et 10 selon l'invention sont fabriquées très simplement, par exemple, par un procédé de co-extrusion, ou par un recouvrement de la première couche 2 ou 12 par reprise d'extrusion, ou encore par un procédé d'enduction-trempage dans un bain de polyuréthane thermoplastique plastifié, ce qui conduit à l'adhésion directe des deux couches 2 et 3 ou 12 et 13.

L'adhésion directe et « naturelle » entre ces deux couches constitutives de la canalisation induit de nombreux avantages, tant techniques qu'économiques, pour la canalisation de l'invention dans sa fabrication, son installation et son utilisation :

En particulier, l'adhésion directe garantit l'absence de « décollement » de la deuxième couche relativement à la première couche, décollement qui pourrait résulter des variations de température et du contact accidentel avec des fluides agressifs présents dans le véhicule. Ce décollement pourrait lui-même causer des stagnations de fluide entre les deux couches constitutives de la canalisation, entraînant des dégradations et induisant une perte des qualités de protection attendues de la deuxième couche. On comprend donc l'intérêt de la suppression du risque de décollement.

L'efficacité de nombreux produits adhésifs ou liants étant réduite au contact du carburant circulant dans la canalisation, on comprend aussi l'avantage d'une adhésion naturelle et directe entre couches, qui limite ce phénomène de perte d'efficacité.

En termes économiques, les liants utilisés pour l'adhésion de couches de composition chimiques différentes sont le plus souvent du type copolymères et assez coûteux, et leur suppression apporte donc une économie dans la fabrication de la canalisation. De plus, dans le cadre d'une fabrication de cette canalisation par extrusion, l'extrusion d'un film de liant nécessite l'utilisation d'une extrudeuse supplémentaire reliée à une tête d'extrusion multicouches, ce qui induit des coûts de machine plus importants et impose souvent des vitesses d'extrusion, donc des cadences de production, plus faibles.

Enfin, l'adhésion « naturelle » des deux couches constitutives de la canalisation peut faciliter la mise en place de raccords ou d'embouts par emmanchement dans la canalisation, évitant en particulier des glissements ou des mauvais montages des raccords, et des pertes d'étanchéité, en cas de non adhésion entre les deux couches.

Divers essais ont été réalisés par les Demandeurs qui démontrent que l'invention améliore nettement les performances de la canalisation, par rapport aux solutions antérieures, en termes de tenue au feu (autoextinguibilité du polyuréthane thermoplastique), à l'abrasion, au contact occasionnel avec divers fluides du compartiment moteur du véhicule, et de résistance à la chaleur (amortissement thermique de 10 à 17 °C), au grenaillage et aux chocs de type "crash test" (11 Joules au moins pour un recouvrement de 1 mm déposé sur une canalisation de diamètre extérieur 8 mm et d'épaisseur 1 mm).

De plus, l'invention évite d'avoir à monter une gaine de protection sur la canalisation, opération laborieuse et donc coûteuse, puisque cette canalisation est déjà, par construction, revêtue de sa couche de protection.

Comme il va de soi, l'invention ne se limite pas aux seules formes de réalisation décrites ci-dessus à titre d'exemples ; elle en embrasse, au contraire, toutes les variantes de réalisation et d'application respectant le même principe et entrant dans le cadre des revendications annexées.

## Revendications

1. Canalisation (1; 10) pour le transport de fluide, par exemple du carburant pour moteur de véhicule automobile, du type comprenant au moins une première couche interne (2; 12) revêtue d'une deuxième couche (3; 13),
**caractérisée en ce que** la deuxième couche (3; 13) est réalisée essentiellement en polyuréthane thermoplastique, et la première couche (2; 12) est réalisée en au moins un polymère compatible avec le transport de fluide chaud, choisi notamment parmi.
- le polyamide 12, 11, 6 ou aromatique,
- le polysulfure de phénylène, ou
- un caoutchouc partiellement ou entièrement réticulé ou un complexe multicouches de caoutchouc partiellement ou entièrement réticulé, la deuxième couche (3 ; 13) en polyuréthane thermoplastique adhérant directement à la première couche interne (2 ; 12) sans couche de liaison intermédiaire.

2. Canalisation pour le transport de fluide selon la revendication 1, **caractérisée en ce que** la première couche interne (2; 12) est réalisée en un complexe contenant, de l'intérieur vers l'extérieur de la canalisation (1; 10),
- un polyamide 6, un liant copolyamide, un polyamide 12, ou
- un alliage polyamide 6 - polyéthylène, un liant copolyamide, un polyamide 12, ou
- un polyester ou copolyester de type PBT, un liant, un polyamide 12, ou
- un polyamide 6, un alcool vinylique de type EVOH, un liant, un polyamide 12, ou
- un alliage polyamide 6 - polyéthylène, un alcool vinylique de type EVOH, un liant, un polyamide 12, ou
- un polyamide 12, un polymère fluoré de type PVDF, un polyamide 12.

3. Canalisation pour le transport de fluide selon la revendication 1 ou 2, **caractérisée en ce que** le polyuréthane thermoplastique de la deuxième couche (3; 13) est de type copolyester - polycaprolactone, de dureté comprise entre 50 et 54 shore D, de densité comprise entre 1,15 et 1,21, avec une température de transition vitreuse comprise entre -35 et -39 °C et une température de fusion comprise entre 195 et 220 °C.

4. Canalisation pour le transport de fluide selon la revendication 1 ou 2, **caractérisée en ce que** le polyuréthane thermoplastique de la deuxième couche (3; 13) est de type ester, de dureté comprise entre 50 et 54 shore D et de densité comprise entre 1,22 et 1,26.

5. Canalisation pour le transport de fluide selon la revendication 1 ou 2, **caractérisée en ce que** le polyuréthane thermoplastique de la deuxième couche (3; 13) est de type copolymère ester-ether ou ether.

6. Canalisation pour le transport de fluide selon l'une des revendications 1 à 5, **caractérisée en ce que** la canalisation (1) possède une troisième couche (4) électriquement conductrice située à l'intérieur de la première couche (2).

7. Canalisation pour le transport de fluide selon la revendication 6, **caractérisée en ce que** la troisième couche (4) est réalisée en polyamide 12 rendu électriquement conducteur par l'ajout de charges de type noir de carbone ou nanotubes de carbone.

8. Canalisation pour le transport de fluide selon l'une des revendications 1 à 7, **caractérisée en ce que** la canalisation (10) possède un treillis de renfort (14) et une couche de recouvrement (15) finale prévus sur la deuxième couche (13).

9. Canalisation pour le transport de fluide selon la revendication 8, **caractérisée en ce que** la couche de recouvrement (15) est réalisée dans un polyuréthane thermoplastique de même nature chimique que celui de la deuxième couche (13).

10. Canalisation pour le transport de fluide selon la revendication 8, **caractérisée en ce que** la couche de recouvrement (15) est réalisée dans un polymère, de type polyamide ou polychlorure de vinyle, compatible chimiquement avec celui employé pour réaliser la deuxième couche (13).

11. Canalisation pour le transport de fluide selon l'une des revendications 1 à 10, **caractérisée en ce que** la première couche (2; 12) a une épaisseur comprise entre 0,9 et 2 mm.

12. Canalisation pour le transport de fluide selon l'une des revendications 1 à 11, **caractérisée en ce que** la deuxième couche (3; 13) a une épaisseur comprise entre 0,2 et 4 mm.

## Patentansprüche

1. Leitungsrohr (1; 10) für den Transport von Fluid, z.B. von Kraftstoff für einen Kraftfahrzeugmotor, vom Typ umfassend mindestens eine erste innere Schicht (2; 12), die mit einer zweiten Schicht (3; 13) beschichtet ist,
**dadurch gekennzeichnet, dass** die zweite Schicht (3; 13) im Wesentlichen aus thermoplastischem Polyurethan hergestellt ist, und die erste Schicht (2; 12) aus mindestens einem Polymer hergestellt ist, das kompatibel mit dem Transport von heißem Fluid ist, ausgewählt insbesondere aus
- Polyamid 12, 11, 6 oder aromatisch,
- Phenylenpolysulfid, oder
- einem teilweise oder vollständig vernetzten Kautschuk oder einem Komplex mit mehreren Schichten aus teilweise oder vollständig vernetztem Kautschuk,
wobei die zweite Schicht (3; 13) aus thermoplastischem Polyurethan direkt an der ersten inneren Schicht (2; 12) ohne Zwischen-Verbindungsschicht haftet.

2. Leitungsrohr für den Transport von Fluid nach Anspruch 1, **dadurch gekennzeichnet, dass** die erste innere Schicht (2; 12) aus einem Komplex hergestellt ist, enthaltend, von innen nach außen des Leitungsrohrs (1; 10),
- ein Polyamid 6, einen Copolyamidbinder, ein Polyamid 12, oder
- eine Legierung Polyamid 6 - Polyethylen, einen Copolyamidbinder, ein Polyamid 12, oder
- ein Polyester oder Copolyester vom Typ PBT, einen Binder, ein Polyamid 12, oder
- ein Polyamid 6, ein Vinylalkohol vom Typ EVOH, einen Binder, ein Polyamid 12, oder
- eine Legierung Polyamid 6 - Polyethylen, ein Vinylalkohol vom Typ EVOH, einen Binder, ein Polyamid 12, oder
- ein Polyamid 12, ein Fluorpolymer vom Typ PVDF, ein Polyamid 12.

3. Leitungsrohr für den Transport von Fluid nach Anspruch 1 oder 2, **dadurch gekennzeichnet, dass** das thermoplastische Polyurethan der zweiten Schicht (3; 13) vom Typ Copolyester - Polycaprolacton mit einer Härte zwischen 50 und 54 Shore D, mit einer Dichte zwischen 1,15 und 1,21, mit einer Glasübergangstemperatur zwischen -35 und -39 °C und einer Schmelztemperatur zwischen 195 und 220 °C ist.

4. Leitungsrohr für den Transport von Fluid nach Anspruch 1 oder 2, **dadurch gekennzeichnet, dass** das thermoplastische Polyurethan der zweiten Schicht (3; 13) vom Typ Ester mit einer Härte zwischen 50 und 54 Shore D und einer Dichte zwischen 1,22 und 1,26 ist.

5. Leitungsrohr für den Transport von Fluid nach Anspruch 1 oder 2, **dadurch gekennzeichnet, dass** das thermoplastische Polyurethan der zweiten Schicht (3; 13) vom Type Copolymer Ester-Ether oder Ether ist.

6. Leitungsrohr für den Transport von Fluid nach einem der Ansprüche 1 bis 5, **dadurch gekennzeichnet, dass** das Leitungsrohr (1) eine dritte elektrisch leitende Schicht (4) aufweist, die im Inneren der ersten Schicht (2) angeordnet ist.

7. Leitungsrohr für den Transport von Fluid nach Anspruch 6, **dadurch gekennzeichnet, dass** die dritte Schicht (4) aus Polyamid 12 hergestellt ist, das durch die Zugabe von Ladungen vom Typ Russ oder Kohlenstoffnanoröhrchen elektrisch leitfähig gemacht wird.

8. Leitungsrohr für den Transport von Fluid nach einem der Ansprüche 1 bis 7, **dadurch gekennzeichnet, dass** das Leitungsrohr (10) ein Verstärkungsgitter (14) und eine Endabdeckungsschicht (15) aufweist, die auf der zweiten Schicht (13) vorgesehen sind.

9. Leitungsrohr für den Transport von Fluid nach Anspruch 8, **dadurch gekennzeichnet, dass** die Abdeckungsschicht (15) aus einem thermoplastischen Polyurethan mit der gleichen chemischen Beschaffenheit wie demjenigen der zweiten Schicht (13) hergestellt ist.

10. Leitungsrohr für den Transport von Fluid nach Anspruch 8, **dadurch gekennzeichnet, dass** die Abdeckungsschicht (15) aus einem Polymer vom Typ Polyamid oder Polyvinylchlorid hergestellt ist, das chemisch mit demjenigen kompatibel ist, das für die Herstellung der zweiten Schicht (13) verwendet wird.

11. Leitungsrohr für den Transport von Fluid nach einem der Ansprüche 1 bis 10, **dadurch gekennzeichnet, dass** die erste Schicht (2; 12) eine Dicke zwischen 0,9 und 2 mm aufweist.

12. Leitungsrohr für den Transport von Fluid nach einem der Ansprüche 1 bis 11, **dadurch gekennzeichnet, dass** die zweite Schicht (3; 13) eine Dicke zwischen 0,2 und 4 mm aufweist.

## Claims

1. A conduit (1; 10) for transporting a fluid, for example the fuel of a motor vehicle engine, of the type comprising at least an inner first layer (2; 12) covered with a second layer (3; 13),
**characterized in that** the second layer (3; 13) is basically made of thermoplastic polyurethane, and the first layer (2; 12) is made of at least one polymer compatible with the transport of hot fluid, selected in particular among
- the polyamide 12, 11, 6 or the aromatic polyamide,
- the polyphenylene sulfide, or
- a partially or totally cross-linked rubber or a partially or totally cross-linked multilayer rubber complex,
the second layer (3; 13) made of thermoplastic polyurethane adhering directly to the inner first layer (2; 12) without any intermediate bonding layer.

2. The conduit for transporting a fluid according to claim 1, **characterized in that** the inner first layer (2; 12) is made of a complex comprising, from the inside to the outside of the conduit (1; 10),
- a polyamide 6, a co-polyamide binder, a polyamide 12, or
- a polyamide 6 - polyethylene alloy, a co-polyamide binder, a polyamide 12, or
- a PBT-type polyester or co-polyester, a binder, a polyamide 12, or
- a polyamide 6, an EVOH-type vinyl alcohol, a binder, a polyamide 12, or
- a polyamide 6 - polyethylene alloy, an EVOH-type vinyl alcohol, a binder, a polyamide 12, or
- a polyamide 12, a PVDF-type fluoropolymer, a polyamide 12.

3. The conduit for transporting a fluid according to claim 1 or 2, **characterized in that** the thermoplastic polyurethane of the second layer (3; 13) is of the co-polyester - polycaprolactone type, having a hardness comprised between 50 and 54 shore D, a density comprised between 1.15 and 1.21, with a glass transition temperature comprised between -35 and -39 °C and a melting temperature comprised between 195 and 220 °C.

4. The conduit for transporting a fluid according to claim 1 or 2, **characterized in that** the thermoplastic polyurethane of the second layer (3; 13) is of the ester type, having a hardness comprised between 50 and 54 shore D and a density comprised between 1.22 and 1.26.

5. The conduit for transporting a fluid according to claim 1 or 2, **characterized in that** the thermoplastic polyurethane of the second layer (3; 13) is of the ester-ether co-polymer or ether type.

6. The conduit for transporting a fluid according to any of claims 1 to 5, **characterized in that** the conduit (1) has an electrically-conductive third layer (4) located inside the first layer (2).

7. The conduit for transporting a fluid according to claim 6, **characterized in that** the third layer (4) is made of polyamide 12 that has been made electrically-conductive by adding fillers of the carbon black or carbon nanotubes type.

8. The conduit for transporting a fluid according to any of claims 1 to 7, **characterized in that** the conduit (10) has a reinforcing lattice (14) and a final covering layer (15) provided on the second layer (13).

9. The conduit for transporting a fluid according to claim 8, **characterized in that** the covering layer (15) is made of thermoplastic polyurethane of the same chemical nature as that of the second layer (13).

10. The conduit for transporting a fluid according to claim 8, **characterized in that** the covering layer (15) is made of polymer, of the polyamide or polyvinyl chloride type, chemically compatible with the one employed for making the second layer (13).

11. The conduit for transporting a fluid according to any of claims 1 to 10, **characterized in that** the first layer (2; 12) has a thickness comprised between 0.9 and 2 mm.

12. The conduit for transporting a fluid according to any of claims 1 to 11, **characterized in that** the second layer (3; 13) has a thickness comprised between 0.2 and 4 mm.
